# EUROPEAN PATENT APPLICATION

(11) **EP 2 957 923 A1**
(43) Date of publication of application: **23.12.2015**
(21) Application number: 14290177.6
(22) Date of filing: 18.06.2014
(51) Int. Cl.: G01S 5/02

(54) **A method of enhancing per call measurement data, and a processor therefor**

(71) Applicant: Alcatel Lucent, 92100 Boulogne-Billancourt (FR)
(72) Inventor: Ho, Lester T.W., Dublin 15 (IE); Dashti, Marzieh, Dublin 15 (IE)
(74) Representative: Sarup, David Alexander

(57) **Abstract**

A method in a network for cellular telecommunications of enhancing per call measurement data, PCMD, is provided, the method comprising: receiving PCMD from at least one user terminal in a geographical area of interest, the PCMD comprising PCMD entries each comprising received signal strength data, timing data and data of user terminal type; receiving self-reported positioning data, SRPD, relating to a social networking application, from at least one of said at least one user terminal, the SRPD comprising SRPD entries each comprising geographical location information, timing information and information of user terminal type; for at least one of the PCMD entries and at least one of the SRPD entries comparing the timing data to the timing information to determine whether said timing data and said timing information match, and comparing the data of user terminal type and the information of user terminal type to determine whether said data of user terminal type and said information of user terminal type match; upon a timing match being determined and a user terminal type match being determined, the geographical location indicated in the SRPD entry being linked to the PCMD entry so as to provide an enhanced PCMD entry which is enhanced with the geographical location indicated in the SRPD entry.

## Description

### Field of the Invention

The present invention relates to telecommunications, in particular to wireless telecommunications.

### Description of the Related Art

For a wireless cellular telecommunications network, maps are required of traffic demand intensity and radio frequency signal strength for the current deployment of base stations. This is in order to determine where further base stations should be deployed for improved system performance. RF signal strength is shown by received signal strength indicators measured by user terminals and send to base stations and hence to the network. The determination of where to put new base stations is called cell planning and is usually performed by network operators.

A small cell base station is a low-powered transceiver node that provides cellular radio coverage in a small area, namely in a range up to 100 metres, so as to complement macrocellular networks. Small cell base stations (often referred to simply as small cells) are deployed in high numbers to provide high capacity in targeted areas. For example, a deployment can be of up to hundreds of thousands of small cells.

Particularly, where small cell base stations, for example metrocells, are used amongst a network of larger cells known as macrocells, in other words small cells are overlaid over an underlying macrocellular network, it is important that the maps are geographically accurate in order to be useful. Because each small cell base station has only a small radio coverage area, inaccuracies in the maps used to work out where to place the small cells can readily cause the small cells to be placed in relatively poor locations.

Small cell base stations have small coverage areas because they have only relatively small transmit powers (for example a small cell base station of metrocell type has approximately 1 or 2 Watts of transmit power) and to be useful are deployed at lower heights than macrocell base stations. A typical radio coverage range of a small cell base station is 100 metres or less in co-channel deployments depending on the underlying macrocell base station's received pilot signal power. A co-channel deployment is one in which a macrocell base station and the overlying small cell base station use the same range of radio frequencies.

The performance of a small cell base station in terms of allowing traffic offload and improving radio coverage is very sensitive to its location. For example, a small cell base station that is deployed 40 metres from its optimum location may well fail to allow traffic offload from intended traffic "hotspots", and may also cause additional interference to users in the hotspot.

Locations of traffic demand hotspots need to be accurately determined to within tens of metres, as do the received pilot signal powers of the underlying macrocell network. This is to allow network operators to reliably place small cell base stations in good locations. In other words, the maps of traffic demand intensity and radio frequency signal strength needs to be accurate to within tens of metres.

### Drive Testing

Many known approaches to formulating such maps are laborious involving field engineers making many test measurements using specialised test equipment ("drive testing"). This process is slow and needs to be repeated whenever any changes to the environment or to the cellular network occur, such as new base stations being added, or base stations being changed in their configuration, for example changes to antennas or transmit powers. Drive testing does not provide information regarding the level of traffic demand at a location.

### Collection of per-call-measurement-data (PCMD)

Another way to obtain information of traffic demand in an area and received signal strengths (RSS) in that area is by recording and processing data measured by user terminals in the course of call connections. This data is known as User Equipment (UE) Per-Call Measurement Data (PCMD).

This data is usually collected by a network operator. For example, received signal strength (RSS) is measured by user terminals and transmitted as Reference Signal Receive Power (RSRP) in LTE or Received Signal Code Power (RSCP) in WCDMA to the network. This is done by sending measurement reports from user terminals that include the RSS data and information about what calls are made. That signal strength data is correlated with data as to where the respective user terminal is geographically located at the time of the measurements in order to update maps of traffic demand and received signal strength, without the use of drive testing.

### Geographical Location Reporting

The geographical location of a user terminal reporting measurements may be determined in a number of known ways. One way is from Global Navigation Satellite Systems (GNSS) such as Global Positioning System (GPS). Another way is by triangulation using measurements of round trip times (RTT) of signals between a user terminal and three or more base stations. In combination with this triangulation, an RSSI value from a user terminal combined with an RSS map of the area in which the user terminal is may also be used to improve the accuracy of the determined geographical location of the user terminal.

It should be noted that user terminals currently deployed do not report location information derived from GNSS back to the network. This is because this functionality is not specified in the Third Generation Partnership Project (3GPP) Standard (specifically Long Term Evolution, LTE, Release 8) for cellular networks that are currently deployed. There are some plans to include reporting of GNSS information in LTE Releases 10 and 11 as part of a feature called Minimisation of Drive Tests, MDT, see for example 3GPP Technical Specification 37.320, "Radio measurement collection for Minimization of Drive Tests (MDT); Overall description; Stage 2," http://www.3gpp.org/DynaReport/37320.htm. However, this will likely not be available in deployed networks and user terminals for many years.

For GNSS location data reporting to be invoked in a user terminal, consent by the user is required, and given privacy concerns of some users, consents may not be widely available to the operator (at least in the absence of some form of user compensation, e.g. reduced tariffs). Furthermore, using GNSS to update the network as to user terminal location uses considerable energy, which shortens battery life of the user terminal. In consequence, prolonged use of GNSS positioning is not desirable.

In systems where GNSS is not used, user terminal location information is determined from alternative known methods, one of which is triangulation. Unfortunately the accuracy of these methods is low with average errors commonly in excess of 100 metres to 200 metres. As mentioned above, this relatively low level of accuracy in determining geographical location is not sufficient for small cell deployment planning.

### Summary

The reader is referred to the appended independent claims. Some preferred features are laid out in the dependent claims.

An example of the present invention is a method in a network for cellular telecommunications of enhancing per call measurement data, PCMD, the method comprising:
receiving PCMD from at least one user terminal in a geographical area of interest, the PCMD comprising PCMD entries each comprising received signal strength data, timing data and data of user terminal type;
receiving self-reported positioning data, SRPD, relating to a social networking application, from at least one of said at least one user terminal, the SRPD comprising SRPD entries each comprising geographical location information, timing information and information of user terminal type;
for at least one of the PCMD entries and at least one of the SRPD entries comparing the timing data to the timing information to determine whether said timing data and said timing information match, and
comparing the data of user terminal type and the information of user terminal type to determine whether said data of user terminal type and said information of user terminal type match;
upon a timing match being determined and a user terminal type match being determined, the geographical location indicated in the SRPD entry being linked to the PCMD entry so as to provide an enhanced PCMD entry which is enhanced with the geographical location indicated in the SRPD entry.

Preferred embodiments provide a technique to improve the geo-location information of Per-Call-Measurement Data using Self-Reported Positioning Data of social network services.

In preferred embodiments, PCMD information, which is available to network operators, is matched with information available from social networking services in order to provide more detailed location information for high accuracies into PCMD information.

In preferred embodiments, by examining the timestamps and user terminal model type of both the PCMD and SRPD, the network is able to associate an SRPD entry obtained from the Social Network Service Provider (SNSP) with the corresponding PCMD data obtained from the operator's network. In some embodiments, the PCMD data is enhanced by the more accurate GNSS-based data of geographical location provided by the SRPD data. In consequence, the geographical locations of user terminal's measurements of RSSI (in other words RF fingerprints) become more accurately identified.

In some preferred embodiments, the enhanced PDMD data provides useful reference points that may be used to infer or calibrate the location information of other PCMD data. The data points of RSS with (accurate) geo-location are calibration anchor points enabling the geographical location information associated with further PCMD entries to be improved. This is done by looking up measured RSS data from the further PCMD entry, in the RF fingerprint map, to provide accurate geo-location data for that PCMD entry.

In some preferred embodiments the geo-location accuracy of PCMD data is improved to well below 40 metres as compared to the known approach where the PCMD data has an accuracy error of +/- more than 100metres. This improved accuracy is important as traffic demand and RSSI maps that are more accurate may then be generated. Also the improved accuracy is important in the process of deployment of small cell base stations, for example metrocell base stations, where identification of suitable sites is done in a more automated way without lengthy surveying and testing of candidate sites by field engineers.

Some preferred embodiments have advantages in being applicable today, whereas the known Minimisation of Drive tests (MDT) feature of 3GPP LTE Release 10 onwards will not be widely available for years. Also, issues of cellular network operators obtaining consent or compensating users to obtain GNSS-derived position information are avoided, as this is dealt with by social network service providers.

Preferably, upon said timing match being determined, said comparing said data of user terminal type and said information of user terminal type is undertaken.

Preferably the timing data in PCMD entries comprises call start time and call end time, and the timing information in SRPD entries comprises event timestamps.

Preferably the data of user terminal type and information of user terminal type comprises device type and Operating System.

Preferably multiple enhanced PCMD entries are provided and used as reference points for calibration of a map of received signal strength measurements as a function of geographical location.

Preferably at least one other PCMD entry in the geographical area of interest is determined as having similar received signal strength data to an enhanced PCMD entry, so is also enhanced with the geographical location indicated in the linked SRPD entry.

Preferably the geographical location indicated in SRPD entries is obtained by Global Navigation Satellite System, GNSS.

Preferably the geographical area of interest is the radio coverage area of a single base station.

The present invention also provides a processor, for use in a network for cellular telecommunications, for enhancing per call measurement data, PCMD, the processor comprising:
an input for PCMD from at least one user terminal in a geographical area of interest, the PCMD comprising PCMD entries each comprising received signal strength data, timing data and data of user terminal type;
an input for self-reported positioning data, SRPD, relating to a social networking application, from at least one of said at least one user terminal, the SRPD comprising SRPD entries each comprising geographical location information, timing information and information of user terminal type;
a comparator for comparing at least one of the PCMD entries to at least one of the SRPD entries, by comparing the timing data to the timing information to determine whether said timing data and said timing information match and comparing the data of user terminal type and the information of user terminal type to determine whether said data of user terminal type and said information of user terminal type match;
a linking stage, operative upon a timing match being determined and a user terminal type match being determined, to link the geographical location indicated in the SRPD entry to the PCMD entry so as to provide an enhanced PCMD entry which is enhanced with the geographical location indicated in the SRPD entry.

Preferably the processor further comprises a database operative to receive and store the enhanced PCMD entries for subsequent use.

Preferably the comparator operates whereby upon said timing match being determined, said comparing said data of user terminal type and said information of user terminal type is undertaken.

Preferably the processor further provides means in which multiple enhanced PCMD entries are provided and used as reference points for calibration of a map of received signal strength measurements as a function of geographical location.

Preferably the processor further comprises means in which at least one other PCMD entry in the geographical area of interest is determined as having similar received signal strength data to an enhanced PCMD entry, so is also enhanced with the geographical location indicated in the linked SRPD entry.

Preferably the geographical area of interest is the radio coverage area of a single base station.

### Brief Description of the Drawings

An embodiment of the present invention will now be described by way of example and with reference to the drawings, in which:
Figure 1 is a diagram illustrating a cellular telecommunications network including an aggregation processor and the relevant data flow within that network, and
Figure 2 is a diagram illustrating operation of the aggregation processor in the network shown in Figure 1.

### Detailed Description

The inventors realised that Per-Call Measurement Data (PCMD) that is available to network operators can be correlated with information of user terminal location available from social networking services in order to provide more accurate location information. Specifically, by matching timestamps and identifiers of user terminal device type in the two sets of data, the location data of one is used to improve the determined location accuracy in the other. In consequence, data points of RSS against location are determined, that have improved geographically location accuracy.

### PCMD data

As previously mentioned information of traffic demand in an area and received signal strength (RSS) in that area is obtained by recording and processing data measured by user terminals in the course of call connections. This is known as User Equipment (UE) Per-Call Measurement Data (PCMD).

Specifically, received signal strength (RSS) is measured by user terminals and transmitted to the network. This is done by sending measurement reports from user terminals that include the RSS data and information about what calls are made. That data is correlated with data as to where the respective user terminal is geographically located at the time of the measurements in order to update maps of traffic demand and received signal strength.

PCMD data includes among other things:
- Geographical location of a user terminal derived from non-GNSS approaches and hence relative inaccurate,
- Timestamps of call/session start and end,
- The model type of the user terminal (for example IPhone 5, Samsung S3,etc), and
- Received Signal Strength (RSS) data measured by the user terminal in respect of the serving cell and neighbouring cells.

Where the user terminal is of Universal Mobile Telecommunications System (UMTS) type, the RSS data is Received Signal Code Power (RSCP) which denotes the power measured by the receiver on a particular physical communication channel. Where the user terminal is of Long Term Evolution (LTE) type, the RSS data is Reference Signal Received Power (RSRP) data.

### Self-Reported Positioning Data (SRPD

In social networking services such as Facebook, Google+ and FourSquare, users are able to "check-in" to locations, see for example:
https://www.facebook.com/help/461075590584469/
https://support.google.com/plus/answer/1306809?hl=en#disable
https://foursquare.com/

When checking-in, the user uses the social networking application on his or her user terminal to share the user's location with his/her contacts; for example, to inform them that the user is at a particular restaurant or ball game. This is done using Global Navigation Satellite Systems (GNSS) information available to the user terminal. Where there are multiple points of interest within the user's vicinity, some additional information (for example "Front entrance") is provided by the user to characterise the location. All this information sent by the user terminal during the check-in process is often referred to as Self-Reported Positioning Data (SRPD)

Amongst the SRPD, which is sent to the social networking service provider (SNSP) for storage, are:
- Geographical location of a user terminal derived from GNSS information,
- Timestamps of when the SRPD was made,
- User terminal device information (for example phone model, such as IPhone5, Samsung S3, etc., and information as to the user terminal's operating system).

### Correlating PCMD and SRPD

By examining the timestamps and user terminal model type of both the PCMD and SRPD, the network is able to associate an SRPD entry obtained from the Social Network Service Provider (SNSP) with the corresponding PCMD data obtained from the operator's network. This enables the PCMD data to be enhanced by the more accurate GNSS-based data of geographical location provided by the SRPD data. In consequence, the geographical locations of user terminal's measurements of RSS (in other words RF fingerprints) become more accurately identified.

These RSS and (accurate) geo-location data points provide calibration anchor points to improve the geographical location information associated with further PCMD entries. This is based on looking up measured RSSI data from the further PCMD entry, in the RF fingerprint map to provide accurate geo-location data for that PCMD entry.

### Example Network

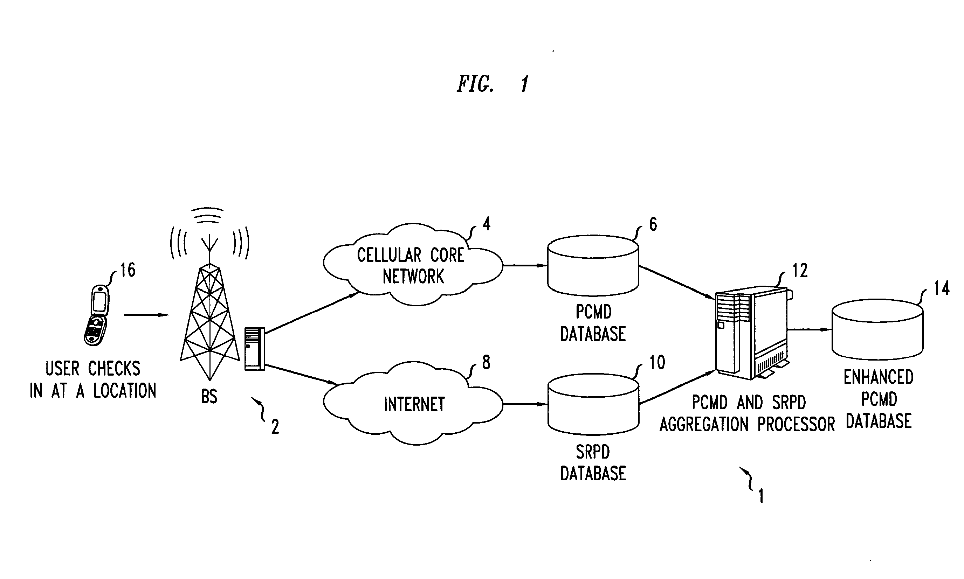

As shown in Figure 1, in a network 1, a base station 2 for cellular telecommunications is connected via a cellular core network 4 to a PCMD database 6. The base station 2 is also connected via the Internet 8 to an SRPD database 10. The PCMD database 6 and SRPD database 10 are both also connected to a PCMD and SRPD aggregation processor 12 which is connected to an enhanced PCMD database 14. A user terminal 16 is connected to the base station 2.

### Operation

When the user uses a social networking application on his user terminal 16, he 'checks-in' to a location by identifying his location on the user terminal 16. The social networking application on the user terminal 16 case the user terminal to send Self-Reported Positioning Data (SRPD) via the Internet 8 to the social network service provider (not shown) which acts to store the data on the SRPD database 10.

At the same time, Per Call Measurement Data (PCMD) is passed via the cellular core network 4 and recorded by the network operator (not shown) in the PCMD database 6. This PCMD data relates to the activity of the user terminal 16 at network layers and below.

As will be described in more detail below, the PCMD data and SRPD data are then compared in the aggregation processor 12 in order to find entries that originate from the same user terminal 16 and hence provide enhanced PCMD data that includes geo-location information from the SRPD data. This enhanced PCMD data is stored in the enhanced PCMD database 14.

In this example the cellular network operator has access to relevant information extracted from the SRPD database 10 through an agreement with the social network service provider.

In alternative embodiments (not shown) other techniques can be used to generate an SRPD database accessible to the PCMD and SRPD aggregation processor, for example data mining of social networking websites using automated web crawling programs.

### PCMD and SRPD aggregation processor

We now described operation of the aggregation processor 12 in more detail.

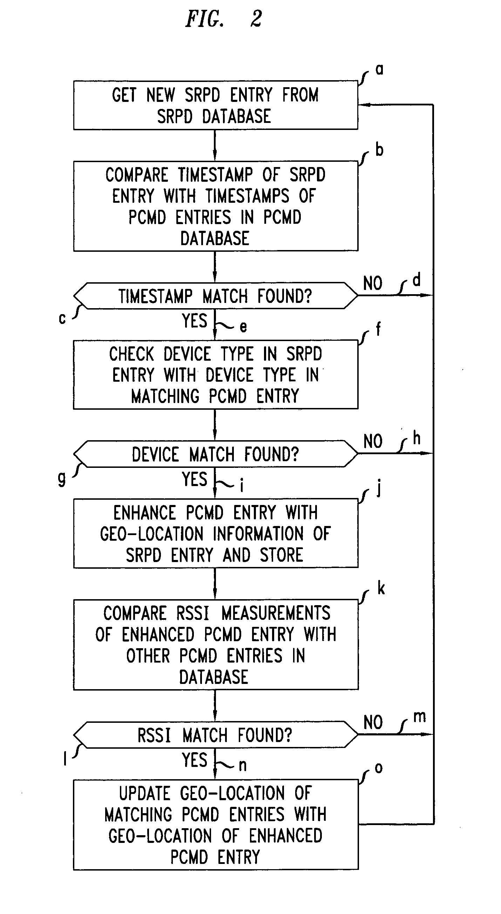

A geographical area of interest is selected, and all SRPD entries having location information indicating locations within that area of interest are considered in turn as follows:
As shown in Figure 2, an SRPD entry is obtained (step a) from the SRPD database 10. The timestamp of the SRPD entry is compared (step b) with timestamps of PCMD entries from the PCMD database 6 to determine (step c) whether the SRPD timestamp and PCMD timestamps match.

If no (d), then a return is made to step a.

If yes (step e) then a comparison is made (step f) of the device type indicated in the SRPD entry to the device type indicated in the timestamp matching PCMD entry to determine (step g) whether or not the device types indicated.

If no (step h), then a return is made to step a.

If yes (step i), then the PCMD data is (step j) modified to include the geo-location information from the SRPD entry and stored.

Thereafter the RSS data in the enhanced PCMD entry stored in the enhanced PCMD database 14 is compared (step k) in the aggregation processor 12, with other PCMD entries from the PCMD database 6 to determine (step *l*) whether or not their RSSI values match.

If no (step m), a return is made to step a.

If yes (step n), the PCMD entries having matching RSS values to that of the enhanced PCMD entry are updated (step o) to include the geo-location information of the enhanced PCMD entry.

### Example of operation of the PCMD and SRPD aggregation processor

The cellular network extracts SRPD in locations that the network operator is interested in. An example is shown in Table 1.

**Table 1: Example of self-reported positioning data (SRPD) for a particular area**

| **SRPD Entry** | **Event Timestamp** | **Device Type, OS** | **Location(Lat/Long)** |
|---|---|---|---|
| #1 | 12:31, 16/8/2013 | IPad4, iOS 7.0.1 | 41.45487, 2.16456 |
| #2 | 13:40, 16/8/2013 | IPhone 5, iOS 6.0.3 | 41.53561, 2.13978 |
| #3 | 16:08, 16/8/2013 | Samsung Galaxy S4, Android 4.1.3 | 41.60016, 2.02884 |

Table 1 shows example SRPD data over the course of one day for a particular geographical area of interest to the network operator. The geographical area of interest is selected as locations close to a specific macrocell base station. In this example, the SRPD data entries selected are those close to a specific macrocell base station that we have denoted as base station 2.

The PCMD and SPRD aggregation processor 12 acts to take this SRPD data and obtain PCMD data entries from that same base station 2 over the course of the same day. Example PCMD data is shown in Table 2.

It should be noted that the data shown in both Table 1 and Table 2 is simplified and truncated for the purposes of explanation. In reality, the SRPD entries in Table 1, and the PCMD entries in Table 2 contain many additional data fields (not shown).

**Table 2: Example of per call measurement data (PCMD) of macrocell base station 2**

| **PCMD Entry** | **Call Start Time** | **Call End Time** | **Device Type** | **RSSI Measurement (dBm)** | **Enhanced Location (Lat/Long)** |
|---|---|---|---|---|---|
| #1 | 13:38, 16/8/2013 | 13:43, 16/8/2013 | IPhone 5 | Cell 21: -68, Cell 19: -91, Cell 24: -85, Cell 30: -88 | 41.5356, 2.1397 (from matching with SRPD entry 2) |
| #2 | 08:45, 16/8/2013 | 09:05, 16/8/2013 | LG Nexus 4 | Cell 21: -82, Cell 23: -90, Cell 16: -112 | N/A |
| #3 | 11:09, 16/8/2013 | 11:16, 16/8/2013 | Samsung Galaxy S4 | Cell 21: -68, Cell 19: -90, Cell 24: -88, Cell 30: -86 | Near 41.5356, 2.1397 (from RF fingerprint matching with PCMD entry 1) |

Consider SRPD entry #2 in Table 1. The time when this SPRD entry was sent occurred between the call start time and call end time of PCMD entry#1 in Table 2. The device type indicated in SRPD entry #2 also matches the device type indicated in PCMD entry #1, namely IPhone5. These two entries are therefore considered linked by originating from the same user terminal; and accordingly, the geographical location data of SRPD entry#2 is appended to PCMD entry#1. This is an example of where the geographical location from which a set of RSS measurements is made has been accurately determined by correlating with SRPD data which uses GNSS for geo-location. (This is more accurate than the usual accuracy error of more than 100 metres when other techniques are used, such as triangulation.)

The PCDM data enhanced in this way provide points within a map of RSS measurements as a function of geographical location (which is known as an RF fingerprint map), where the geographical location is known accurately. This is valuable for example in inferring more information about other PCMD entries. For example, in Table 2, the RSS measurements (also known as the RF fingerprints) of PCMD entry#1 and PCMD entry #3 are very similar. This similarity suggests a high likelihood that these two PCMD entries were made at geographical locations that were in close proximity to each other. In consequence PCMD entry #3 (and any other PCMD entry in that geographical area of interest) is improved based on the SRPD location data associated with enhanced PCMD entry#2. For example PCMD entry #3 is enhanced with geographical location information "Near 41.5356, 2.1397 (from RF fingerprint matching with PCMD entry 1)".

It will be noted that the additional geographical location information provided to PCMD data by SRPD data helps cellular networks to build more accurate traffic demand and RSS(RF fingerprint) maps in those areas where SRPD data is available.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method in a network for cellular telecommunications of enhancing per call measurement data, PCMD, the method comprising:
receiving PCMD from at least one user terminal in a geographical area of interest, the PCMD comprising PCMD entries each comprising received signal strength data, timing data and data of user terminal type;
receiving self-reported positioning data, SRPD, relating to a social networking application, from at least one of said at least one user terminal, the SRPD comprising SRPD entries each comprising geographical location information, timing information and information of user terminal type;
for at least one of the PCMD entries and at least one of the SRPD entries comparing the timing data to the timing information to determine whether said timing data and said timing information match, and
comparing the data of user terminal type and the information of user terminal type to determine whether said data of user terminal type and said information of user terminal type match;
upon a timing match being determined and a user terminal type match being determined, the geographical location indicated in the SRPD entry being linked to the PCMD entry so as to provide an enhanced PCMD entry which is enhanced with the geographical location indicated in the SRPD entry.

2. A method according to claim 1, in which upon said timing match being determined, said comparing said data of user terminal type and said information of user terminal type is undertaken.

3. A method according to claim 1 or claim 2, in which the timing data in PCMD entries comprises call start time and call end time, and the timing information in SRPD entries comprises event timestamps.

4. A method according to any preceding claim, in which the data of user terminal type and information of user terminal type comprises device type and Operating System.

5. A method according to any preceding claim, in which multiple enhanced PCMD entries are provided and used as reference points for calibration of a map of received signal strength measurements as a function of geographical location.

6. A method according to any preceding claim, in which at least one other PCMD entry in the geographical area of interest is determined as having similar received signal strength data to an enhanced PCMD entry, so is also enhanced with the geographical location indicated in the linked SRPD entry.

7. A method according to any preceding claim, in which the geographical locations indicated in SRPD entries are obtained by Global Navigation Satellite System, GNSS.

8. A method according to any preceding claim, in which the geographical area of interest is the radio coverage area of a single base station.

9. A processor, for use in a network for cellular telecommunications, for enhancing per call measurement data, PCMD, the processor comprising:
an input for PCMD from at least one user terminal in a geographical area of interest, the PCMD comprising PCMD entries each comprising received signal strength data, timing data and data of user terminal type;
an input for self-reported positioning data, SRPD, relating to a social networking application, from at least one of said at least one user terminal, the SRPD comprising SRPD entries each comprising geographical location information, timing information and information of user terminal type;
a comparator for comparing at least one of the PCMD entries to at least one of the SRPD entries, by comparing the timing data to the timing information to determine whether said timing data and said timing information match and comparing the data of user terminal type and the information of user terminal type to determine whether said data of user terminal type and said information of user terminal type match;
a linking stage, operative upon a timing match being determined and a user terminal type match being determined, to link the geographical location indicated in the SRPD entry to the PCMD entry so as to provide an enhanced PCMD entry which is enhanced with the geographical location indicated in the SRPD entry.

10. A processor according to claim 9, further comprising a database operative to receive and store the enhanced PCMD entries for subsequent use.

11. A processor according to claim 9 or claim 10, in which the comparator operates whereby upon said timing match being determined, said comparing said data of user terminal type and said information of user terminal type is undertaken.

12. A processor according to any of claims 9 to 11, further providing means in which multiple enhanced PCMD entries are provided and used as reference points for calibration of a map of received signal strength measurements as a function of geographical location.

13. A processor according to any of claims 9 to 12, further comprising means in which at least one other PCMD entry in the geographical area of interest is determined as having similar received signal strength data to an enhanced PCMD entry, so is also enhanced with the geographical location indicated in the linked SRPD entry.

14. A processor according to any of claims 9 to 13, in which the geographical area of interest is the radio coverage area of a single base station.

## Amended claims

### Amended claims in accordance with Rule 137(2) EPC.

1. A method in a network for cellular telecommunications of enhancing per call measurement data, PCMD, the method comprising:
receiving PCMD from at least one user terminal (16) in a geographical area of interest, the PCMD comprising PCMD entries (6) each comprising received signal strength data, and timing data;
receiving self-reported positioning data, SRPD, relating to a social networking application, from at least one of said at least one user terminal, the SRPD comprising SRPD entries (10) each comprising geographical location information, and timing information;
**characterised by**
the PCMD entries each comprise data of user terminal type;
the SRPD entries each comprise information of user terminal type; and
the method further comprises:
for at least one of the PCMD entries and at least one of the SRPD entries comparing (Fig 2:b) the timing data to the timing information to determine whether said timing data and said timing information match, and
comparing (Fig 2:f) the data of user terminal type and the information of user terminal type to determine whether said data of user terminal type and said information of user terminal type match;
upon a timing match being determined and a user terminal type match being determined, the geographical location indicated in the SRPD entry being linked (Fig 2:i) to the PCMD entry so as to provide an enhanced PCMD entry (14) which is enhanced with the geographical location indicated in the SRPD entry.

2. A method according to claim 1, in which upon said timing match being determined, said comparing said data of user terminal type and said information of user terminal type is undertaken.

3. A method according to claim 1 or claim 2, in which the timing data in PCMD entries comprises call start time and call end time, and the timing information in SRPD entries comprises event timestamps.

4. A method according to any preceding claim, in which the data of user terminal type and information of user terminal type comprises device type and Operating System.

5. A method according to any preceding claim, in which multiple enhanced PCMD entries (14) are provided and used as reference points for calibration of a map of received signal strength measurements as a function of geographical location.

6. A method according to any preceding claim, in which at least one other PCMD entry in the geographical area of interest is determined as having similar received signal strength data to an enhanced PCMD entry, so is also enhanced with the geographical location indicated in the linked SRPD entry.

7. A method according to any preceding claim, in which the geographical locations indicated in SRPD entries are obtained by Global Navigation Satellite System, GNSS.

8. A method according to any preceding claim, in which the geographical area of interest is the radio coverage area of a single base station.

9. A processor (12), for use in a network for cellular telecommunications, for enhancing per call measurement data, PCMD, the processor comprising:
an input for PCMD (6) from at least one user terminal in a geographical area of interest, the PCMD comprising PCMD entries each comprising received signal strength data and timing data;
an input for self-reported positioning data, SRPD, (10) relating to a social networking application, from at least one of said at least one user terminal, the SRPD
comprising SRPD entries each comprising geographical location information and timing information;
the PCMD entries each comprise data of user terminal type;
the SRPD entries each comprise information of user terminal type; and
the method further comprises:
a comparator for comparing at least one of the PCMD entries to at least one of the SRPD entries, by comparing the timing data to the timing information to determine whether said timing data and said timing information match and comparing the data of user terminal type and the information of user terminal type to determine whether said data of user terminal type and said information of user terminal type match;
a linking stage, operative upon a timing match being determined and a user terminal type match being determined, to link the geographical location indicated in the SRPD entry to the PCMD entry so as to provide an enhanced PCMD entry which is enhanced with the geographical location indicated in the SRPD entry.

10. A processor according to claim 9, further comprising a database (14) operative to receive and store the enhanced PCMD entries for subsequent use.

11. A processor according to claim 9 or claim 10, in which the comparator operates whereby upon said timing match being determined, said comparing said data of user terminal type and said information of user terminal type is undertaken.

12. A processor according to any of claims 9 to 11, further providing means in which multiple enhanced PCMD entries are provided and used as reference points for calibration of a map of received signal strength measurements as a function of geographical location.

13. A processor according to any of claims 9 to 12, further comprising means in which at least one other PCMD entry in the geographical area of interest is determined as having similar received signal strength data to an enhanced PCMD entry, so is also enhanced with the geographical location indicated in the linked SRPD entry.

14. A processor according to any of claims 9 to 13, in which the geographical area of interest is the radio coverage area of a single base station (2).
